# FASCICULE DE BREVET EUROPEEN

(11) **EP 3 715 029 B1**
(45) Date de publication et mention de la délivrance du brevet: **27.10.2021**
(21) Numéro de dépôt: 20165318.5
(22) Date de dépôt: 24.03.2020
(51) Int. Cl.: B23B 49/02, B23B 51/04

(54) **GABARIT ET PROCEDE DE PERCEMENT**
SCHABLONE UND BOHRVERFAHREN
TEMPLATE AND METHOD FOR DRILLING

(30) Priorité: 29.03.2019 BE 201905204
(43) Date de publication de la demande: 30.09.2020
(73) Titulaire: Brahy, Xavier, 1180 Uccle (BE)
(72) Inventeur: Brahy, Xavier, 1180 Uccle (BE)
(74) Mandataire: Pecher, Nicolas

(56) Documents cités:
- GB-A- 2 050 212
- GB-A- 2 458 132
- US-A- 5 143 489
- US-A- 5 629 756
- US-A- 5 871 310
- US-A1- 2009 169 316
- US-A1- 2012 216 415
- US-A1- 2016 273 235
- US-B1- 7 845 089

## Description

### Domaine technique

L'invention se rapporte à un gabarit de percement pour le percement dans une paroi d'une ouverture cylindrique, à un procédé pour exécuter un tel percement en une position précise, et à un kit comportant un tel gabarit et une scie-cloche pour effectuer le percement.

### Etat de la technique

Un problème que rencontre fréquemment l'électricien sur chantier est qu'il retrouve à l'endroit précis où il doit effectuer un percement à la scie cloche - par exemple dans une paroi murale en contreplaqué pour l'installation d'un boîtier d'encastrement pour une prise de courant ou un interrupteur ou encore dans un faux-plafond en panneaux de plaque de plâtre pour l'installation d'un luminaire - un trou d'un diamètre supérieur à 6mm ; l'empêchant ainsi de positionner la mèche de sa scie cloche et d'effectuer son percement. Par extension et dans les domaines qui leur sont propres, les plombiers et les chauffagistes rencontrent également cette problématique, de même que les menuisiers et les ébénistes.

Une solution connue à ce problème comporte la réalisation d'une nouvelle assise (pièce encastrée) et les étapes suivantes :
a) Si le diamètre du trou existant le permet, découper et insérer un lattis en bois derrière la paroi, le retenir tout en le fixant à la paroi au moyen de deux vis traversantes.
b) A partir d'une autre paroi, réaliser une découpe à la scie cloche d'un diamètre légèrement inférieur à celui du trou existant.
c) Récupérer le disque issu de ce percement et y dessiner les axes horizontaux et verticaux.
d) Centrer le disque dans le trou existant en faisant correspondre les axes dudit disque avec les axes de percement (dessinés sur la paroi ou apparaissant sous forme de traits laser). Maintenir le disque en position et le fixer au lattis au moyen de deux vis traversantes.
e) In fine, réaliser le percement à la scie cloche dans la paroi.
f) Le cas échéant, si les deux vis de fixation du lattis n'ont pas été emportées avec le percement final, retirer les deux vis de fixation du lattis et reboucher les trous de vis dans la paroi.

Cette solution est contraignante car :
a) Nécessité d'avoir sous la main : un lattis adapté à la dimension du trou existant, une paroi de même épaisseur que la paroi à découper et une scie cloche de diamètre inférieure au trou à réaliser in fine.
b) Les trous des deux vis de fixation du lattis à la paroi se trouveront bien souvent en dehors de la zone de découpe finale et devront donc être rebouchés par la suite.
c) Le tracé des axes sur le disque, le positionnement et la fixation du disque sur le lattis demandent une grande précision car aucun réglage n'est envisageable une fois le disque vissé sur le lattis.
d) Le temps de mise en œuvre est important. Cette solution est donc chronophage, et le sera d'autant plus qu'il y a de percements à réaliser dans ces conditions.

Une telle solution est également applicable, entre autres, aux panneaux en plaques de plâtre.

Une autre solution connue à ce problème, plus élaborée et plus contraignante, comporte l'utilisation d'un gabarit à diamètre unique (pièce apparente) et les étapes suivantes :
a) Découper dans un panneau - en bois de préférence car le bois résiste mieux aux frottements qu'une plaque de plâtre ou tout autre panneau en plâtre - un rectangle dont la mesure des côtés sera bien supérieure au diamètre de la découpe à réaliser (par exemple, pour une découpe de 68mm de diamètre, on utilisera un rectangle en bois de 120x120mm de côté).
b) Tracer les axes verticaux et horizontaux sur le rectangle, le croisement des deux axes correspondant au centre de la découpe à réaliser.
c) Réaliser la découpe souhaitée dans le rectangle (dans le présent exemple, une découpe de 68mm).
d) Percer un trou aux quatre coins du rectangle afin de pouvoir y faire passer une vis.
e) Présenter le panneau devant la paroi à découper en faisant correspondre parfaitement les axes du panneau avec les axes de la paroi (dessinés sur la paroi ou apparaissant sous forme de traits laser).
f) Maintenir le rectangle parfaitement en position et le fixer à la paroi au moyen de quatre vis traversantes (au niveau des coins).
g) In fine, réaliser le percement à la scie cloche dans la paroi, suivant la découpe réalisée à l'étape c).
h) Retirer le rectangle en ôtant ses quatre vis de fixation.
i) Reboucher les trous laissés par les quatre vis dans la paroi.

Cette solution est contraignante car :
a) Nécessité d'avoir un panneau, en bois ou en plâtre, sous la main.
b) Les trous des quatre vis de fixation du gabarit à la paroi se trouveront en dehors de la zone de découpe finale et devront donc être rebouchés par la suite.
c) Le tracé des axes sur le gabarit, le positionnement et la fixation du gabarit sur le panneau demande une grande précision car aucun réglage n'est envisageable une fois le gabarit vissé sur la paroi.
d) Un tel gabarit, sous forme de rectangle dans le présent exemple, s'use relativement vite dû aux frottements des dents de la scie cloche sur le rebord circulaire intérieur dudit gabarit.
e) Un tel gabarit permet moins facilement un percement près d'un rebord du fait des dimensions de son empreinte apparente.
f) Ce gabarit est quelque peu lourd et surtout encombrant à transporter.
g) Ce type de gabarit ne fonctionne que pour un et un seul diamètre de découpe.
h) Le temps de mise en œuvre reste important. Cette solution est donc également chronophage.

Une telle solution est également applicable, entre autres, aux panneaux en plaques de plâtre.

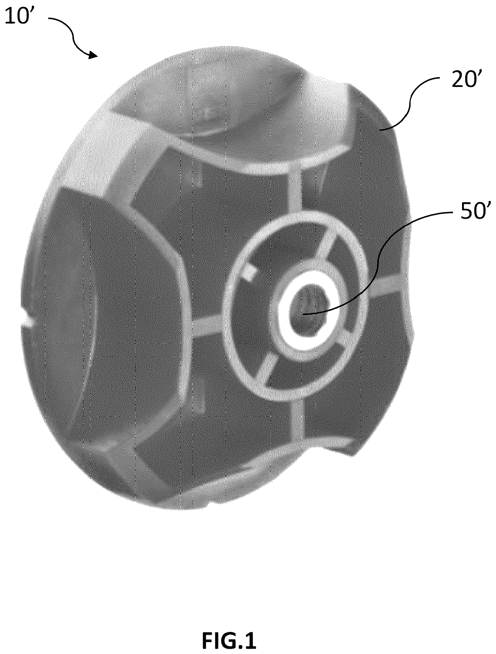

On connait une pièce de centrage fournie par la société Helia, sous la référence 1089-31 et représentée schématiquement à la Fig. 1. Cette pièce de centrage se fixe à la paroi au moyen de films adhésifs double face. Une fois appliquée sur la paroi à percer la pièce de centrage ne peut plus être déplacée, et son positionnement précis ne peut plus être obtenu. https://www.helia-elektro.be/fr BE/produits/installation-electrique/meule-diamant-et-gabarit-de-percage/outils-pour-parois-creuses/727/piece-de-centrage.

Faisant référence à la Fig. 1, cette pièce de centrage 10' présente un corps 20' réalisé en plastique, ayant une forme généralement circulaire, et présente un trou central 50', qui sert de guide pour la mèche d'une scie cloche. Cette pièce de centrage s'utilise conjointement avec des disques adhésifs sur les deux faces. On applique le disque adhésif à l'endroit de la paroi où on veut réaliser le percement, et ensuite on applique le guide de centrage sur le disque. Cependant, ni le disque, ni la pièce de centrage ne comportent de moyens destinés à faciliter le positionnement. De plus, une fois le disque adhésif et éventuellement la pièce de centrage appliqués, il est difficile, si pas impossible, de corriger le positionnement.

On connait par le document EP1895630B1 un gabarit de réalisation d'une ouverture dans une paroi, se présentant sous la forme d'une plaque à disposer contre ladite paroi. Cette plaque est percée d'un orifice de positionnement dont les dimensions sont sensiblement égales aux dimensions intérieures d'un orifice d'accueil en vis-à-vis duquel il est destiné à être placé, et, d'autre part, pourvue, à distance dudit orifice de positionnement, d'au moins un moyen de positionnement du centre d'un autre orifice d'accueil distinct dudit orifice d'accueil déjà réalisé. Ce gabarit ne prévoit cependant pas de moyens de fixation pour fixer le gabarit sur la paroi pendant la réalisation du percement. Il est simplement destiné à marquer la ou les positions relatives d'une pluralité d'ouvertures.

On connait par le document US2009/0169316 un gabarit pour la réalisation d'une ouverture dans une paroi latérale d'un tuyau. Ce gabarit est composé d'une plaque de base qui peut être fixée à la paroi latérale du tuyau. Un manchon tubulaire est monté sur la plaque de base et a un diamètre d'alésage dimensionné pour recevoir un arbre pilote lorsqu'une scie cloche est avancée vers et scie à travers la paroi du tuyau. Aucun moyen n'est prévu pour permettre l'alignement précis du gabarit sur une surface.

Le document US 2016/0273235 A1 divulgue un gabarit de percement selon le préambule de la revendication 1.

### Résumé de l'invention

Un but de l'invention est de résoudre ces problèmes en fournissant un gabarit de percement qui soit facile à utiliser et qui permette un positionnement aisé et précis. L'invention est définie par les revendications indépendantes. Les revendications dépendantes définissent des modes de réalisation préférés de l'invention.

Suivant un premier aspect, l'invention fournit un gabarit de percement pour le percement d'une ouverture cylindrique d'un premier diamètre dans une paroi, comprenant un corps présentant une première face plane, le corps étant inscriptible dans un cylindre de diamètre inférieur au premier diamètre et ayant un axe central perpendiculaire à ladite première face plane, percé en son centre d'un trou central cylindrique, suivant ledit axe central, le corps étant percé de deux premiers trous additionnels, suivant des axes parallèles audit axe central. Les deux premiers trous additionnels permettent de fixer le gabarit à la paroi au moyen de vis. Suivant l'invention, le corps présente une seconde face plane, parallèle à la première face plane, la seconde face plane comportant deux premières marques suivant des axes perpendiculaires, et passant par l'axe central, lesdites marques étant réalisées en creux dans ladite surface.

Le corps du gabarit présente avantageusement une épaisseur mesurée perpendiculairement à la première face plane, à la périphérie du trou central, égale ou supérieure à 1 cm, ou même 2 cm ou 3 cm. Cette hauteur permet d'obtenir un guidage adéquat de la mèche de la scie cloche.

Le cylindre dans lequel le gabarit est inscriptible peut avoir un diamètre inférieur à 70 mm, par exemple 60 mm.

Le corps du gabarit peut avantageusement être percé de deux seconds trous additionnels, suivant des axes parallèles audit axe central.

Le corps du gabarit peut également être percé de quatre troisièmes trous additionnels, suivant des axes parallèles audit axe central. Ces seconds et troisièmes trous additionnels offrent à l'utilisateur une souplesse de choix quant aux trous à utiliser pour fixer le gabarit à la paroi.

Les premiers trous additionnels peuvent être situés sur un même diamètre dudit cylindre, de part et d'autre de l'axe central.

Les seconds trous additionnels peuvent être situés sur un même diamètre, de part et d'autre de l'axe central, à 90° par rapport aux premiers trous additionnels.

Les troisièmes trous additionnels peuvent être situés sur un même diamètre, de part et d'autre de l'axe central, à 45° de part et d'autre par rapport audit diamètre des premiers trous additionnels. Les premiers, seconds et/ou troisièmes trous additionnels peuvent être situés à une même distance du trou central.

L'un au moins des premiers et/ou des seconds et/ou des troisièmes trous additionnels peut présenter une forme oblongue orientée vers le trou central.

L'un au moins des premiers et/ou des seconds et/ou des troisièmes trous additionnels peut présenter une forme oblongue orientée suivant un cercle centré sur l'axe central. Ces formes oblongues permettent un ajustement de la position du gabarit, si nécessaire.

La seconde face peut comporter en outre deux secondes marques suivant des axes perpendiculaires, passant par l'axe central et orientées à 45° par rapport aux premières marques. Ces premières et secondes marques permettent le positionnement précis du gabarit.

Le corps peut présenter une surface périphérique cylindrique ayant pour axe l'axe central, et présentant une pluralité de marques axiales suivant des génératrices de ce cylindre, ces marques axiales étant disposées à 45° ou 90° les unes des autres. Elles peuvent avantageusement être disposées dans le prolongement des premières et secondes marques.

Suivant un second aspect, l'invention se rapporte à un procédé pour exécuter le percement dans une paroi d'une ouverture cylindrique d'un premier diamètre, en une position précise, comportant les étapes de
a) obtenir un gabarit de percement suivant l'invention ;
b) positionner le gabarit de telle sorte que son axe central soit positionné au droit du centre du trou cylindrique à réaliser ;
c) fixer le gabarit à la paroi au moyen de vis introduites dans au moins deux des premiers, seconds et/ou troisièmes trous additionnels ;
d) obtenir une scie-cloche comportant une mèche centrale ayant un diamètre égal ou inférieur au diamètre du trou central et présentant un diamètre extérieur égal au premier diamètre ;
e) introduire la mèche centrale dans le trou central et actionner la scie-cloche.

De préférence, on utilise des vis dont la tête présente une face inférieure plate.

De préférence, le gabarit obtenu à l'étape a) comporte des secondes marques et/ou des marques axiales, et dans lequel, à l'étape b), le positionnement du gabarit est réalisé à l'aide d'un niveau laser, en ajustant lesdites marques sur un faisceau du niveau laser.

De préférence, le gabarit obtenu à l'étape a) comporte au moins un premier et/ou second et/ou troisième trous additionnels oblongs, et dans lequel, aux étapes b) et c), le positionnement et la fixation du gabarit sont ajustés en vissant une première vis sans la serrer, et en ajustant ensuite la position précise en déplaçant le gabarit suivant ledit trou additionnel oblong. Une fois la position du gabarit ajustée, on peut serrer la première vis, et en serrant ensuite une seconde vis, avant de faire le percement.

Suivant troisième aspect, l'invention se rapporte à un kit pour réaliser le percement dans une paroi d'ouvertures cylindriques d'un premier diamètre comportant un gabarit l'invention et une scie cloche comportant une mèche centrale ayant un diamètre égal ou inférieur au diamètre du trou central et présentant un diamètre extérieur égal au diamètre des ouvertures cylindriques à réaliser.

Le kit peut comprendre en outre au moins une vis dont la tête présente une face inférieure plate.

### Brève description des dessins

Ces aspects et d'autres aspects de l'invention seront expliqués plus en détail au moyen du/des modes de réalisation de l'invention décrits ci-après à titre d'exemple(s), en référence aux dessins annexés, sur lesquels
la Fig. 1 est une vue en perspective cavalière du gabarit de percement de l'art antérieur discuté ci-dessus ;
la Fig. 2 est une vue latérale d'un mode de réalisation d'un gabarit de percement suivant l'invention ;
la Fig. 3 est une vue du dessus de ce même gabarit ;
la Fig. 4 est une vue du dessous de ce même gabarit ;
la Fig. 5 est une vue en perspective cavalière de ce même gabarit.
la Fig. 6 est une vue en perspective cavalière de ce même gabarit, en relation avec la trace d'un faisceau laser, le gabarit étant parfaitement aligné.
la Fig. 7 est une vue en perspective cavalière de ce même gabarit, en relation avec la trace d'un faisceau laser, le gabarit présentant un défaut d'alignement.

### Description détaillée d'un mode de réalisation de l'invention

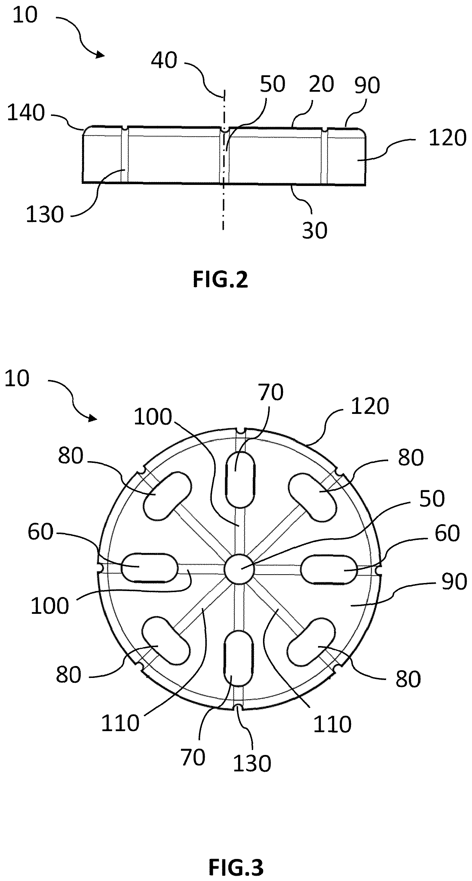

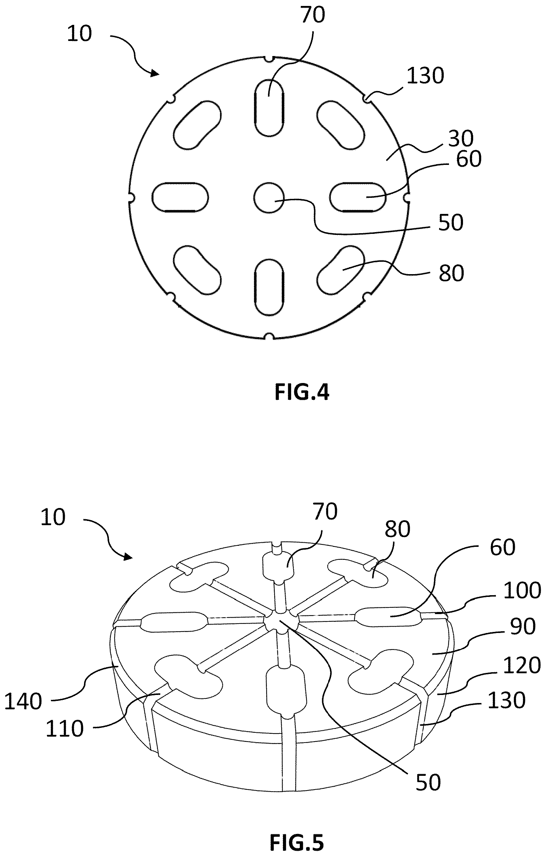

Les Fig. 2, 3, 4 et 5 sont respectivement des vues latérale, de dessus, de dessous et en perspective cavalière d'un mode de réalisation d'un gabarit de percement suivant l'invention. Ce gabarit 10 présente un corps de gabarit 20. Une première face plane du gabarit 30 est destinée à être appliquée sur la paroi à percer. Un trou central 50 est présent dans le corps du gabarit et est destiné à recevoir une mèche d'une scie-cloche. Le diamètre de ce trou 50 est égal ou légèrement supérieur au diamètre de la mèche de la scie-cloche utilisée. A titre exemplatif, lorsque la mèche de la scie-cloche utilisée présente un diamètre de 6 mm, le trou central 50 peut avantageusement présenter un diamètre de 6,5 mm. Suivant l'invention, au moins deux premiers trous additionnels 60 sont pratiqués dans le corps du gabarit, avantageusement à égale distance du trou central 50, et sur un même diamètre passant par ce trou central. Deux seconds trous additionnels 70 peuvent également être réalisés, avantageusement également à même distance du trou central 50, sur un même diamètre perpendiculaire au premier diamètre. Enfin, quatre troisièmes trous additionnels 80 peuvent être situés sur des diamètres orientés à 45° par rapport aux deux diamètres précités. La fonction de ces trous sera discutée avec la description de la méthode d'utilisation.

Les premiers, seconds et troisièmes trous additionnels peuvent avantageusement être oblongs. Un trou oblong est un trou plus long que large terminé par deux demi-cylindres. Il est souvent réalisé à l'aide d'une fraise, qui est déplacée après perçage sur la longueur du trou. Ces trous oblongs peuvent être orientés suivant un diamètre pour les premiers 60 et second 70 trous additionnels, ou suivant un cercle centré sur l'axe du corps 20 du gabarit 10 pour les troisièmes 80 trous additionnels, comme représenté à la Fig. 3

Comme représenté à la Fig. 3, le gabarit 10 présente une seconde face plane 90, parallèle à la première face plane 30. La surface périphérique 120 du corps de gabarit est illustrée comme cylindrique. La seconde face plane 90 comporte des premières marques 100 et avantageusement des secondes marques 110. Ces marques sont des diamètres du corps 20 du gabarit 10, et peuvent être agencées à 45° les unes des autres. Elles peuvent être orientés vers les trous correspondants. Des marques axiales 130 peuvent être prévues sur la surface périphérique 120 du corps 20 du gabarit. Ces marques axiales 130 peuvent être disposées aux mêmes angles que les premières 100 et secondes marques 110. Ces marques sont réalisées en creux, par exemple de forme semi-circulaire. L'arête formée entre la seconde face plane 90 et la surface périphérique 120 peut présenter un arrondi 140.

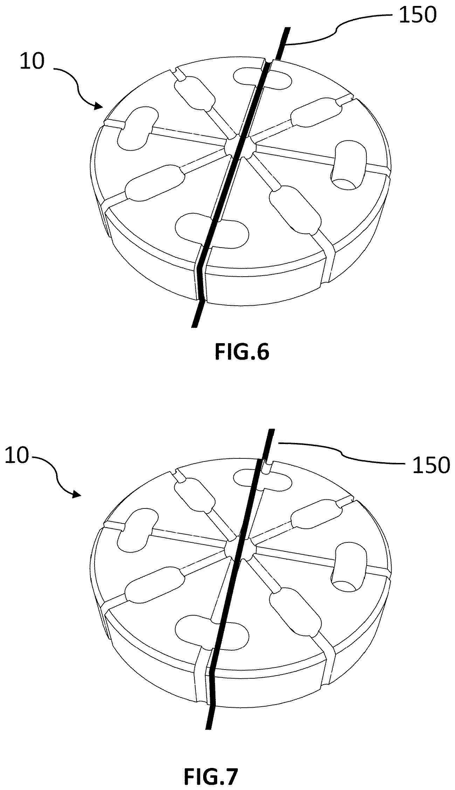

Lorsqu'il est nécessaire de réaliser un percement positionné avec une précision de l'ordre du millimètre, l'homme de métier utilise le plus souvent un rayon laser de positionnement. Les marques en creux du gabarit suivant l'invention, lorsqu'elles sont exposées à un faisceau laser, constituent une « gorge de lumière » recueillant et épousant parfaitement le rayon laser, permettant ainsi de positionner le gabarit de manière millimétrique. La Fig. 6 représente un gabarit 10 en relation avec un faisceau laser, dont la trace 150, passant par le centre du gabarit, «tombe » dans la marque en creux et s'y inscrit parfaitement, avertissant ainsi l'utilisateur que le gabarit est parfaitement positionné sur son axe, et dans la bonne orientation. En procédant de la sorte avec l'axe horizontal et l'axe vertical, le gabarit est alors parfaitement positionné et peut être fixé à la paroi avant percement.

la Fig. 7 est une vue en perspective cavalière de ce même gabarit 10, en relation avec la trace 150 d'un faisceau laser, le gabarit présentant un défaut d'alignement. Le faisceau laser 150 ne s'inscrit pas dans la marque en creux, indiquant clairement que le positionnement du gabarit doit être ajusté. L'exemple de la Fig. 7 montre un défaut d'alignement angulaire, mais un défaut latéral apparaitrait tout aussi clairement. Ce principe de positionnement peut servir de repère pour des axes qui seraient crayonnés sur la paroi mais surtout, lorsque la paroi est finie et ne peut plus supporter aucune trace d'aucune sorte (lorsque la mise en peinture de la paroi est terminée par exemple).

Le corps 20 du gabarit 10 peut être réalisé en tout matériau résistant suffisamment aux frottements, à la chaleur dégagée par lesdits frottements, à la compression et au serrage. Il peut être une pièce moulée en polymère ou en résine, ou usinée en métal tel que l'aluminium, l'acier, le laiton ou autres. Du choix du ou des matériaux composant le gabarit dépendra la durée de vie du gabarit.

Nous donnons ci-après les caractéristiques du mode de réalisation représenté aux Figs. 2 à 5. Cependant il est bien entendu que ces dimensions sont données à titre purement exemplatif, et que d'autres valeurs peuvent être considérées :

| | |
|---|---|
| Hauteur du gabarit | 12mm |
| Diamètre extérieur du gabarit | 60 mm |
| Marquages 100, 110, 130 | marquages en creux, de forme semi-circulaire, de profondeur 1mm et de largeur 2mm. |
| Diamètre du trou central 50 | 6,5 mm |
| Trous oblongs | 6 mm de largeur et 12 mm de longueur |
| Distance entre surface périphérique du corps de gabarit et bord extérieur des trous | 5 mm |
| Rayon de l'arrondi 140 | 2 mm |

### Procédé

Après avoir décrit le gabarit 10 suivant l'invention, nous décrivons maintenant le procédé pour exécuter le percement, dans lequel on exploite les caractéristiques du gabarit.

Le procédé, qui inclut les caractéristiques de la revendication indépendante 12, comporte les étapes suivantes :
a) prendre un gabarit de percement tel que décrit ci-dessus et faire correspondre deux des premières 100 ou secondes 110 marques avec les axes perpendiculaires au percement à réaliser dans la paroi en bois ou dans la plaque en plâtre (ces axes sont dessinés sur la paroi ou sur la plaque ou apparaissent sous forme de traits laser lorsqu'un niveau laser est utilisé) ;
b) fixer le gabarit de percement à la paroi à l'aide de deux vis, sans serrage. Pour ce faire, utiliser au choix deux des huit trous additionnels ;
c) une fois le gabarit de percement fixé à la paroi, si nécessaire, effectuer l'un ou l'autre réglage rendu possible grâce à la forme oblongue des trous additionnels du gabarit, et serrer les vis ;
d) réaliser la découpe à la scie cloche dans le panneau, la mèche de la scie cloche étant guidée par le trou central 50 ;
e) la découpe terminée, récupérer le gabarit de percement fixé au disque découpé permettant ainsi de réaliser une nouvelle découpe.

### Avantages de l'invention

Les avantages de cette nouvelle solution sont les suivants :
- Avantage considérable de mise en œuvre : le gain de temps de mise en œuvre du gabarit de percement par rapport aux solutions décrites aux paragraphes [0003] et [0004] est estimé à plus de 80%, ce qui est considérable.
- Avantages pratiques pour l'utilisateur : Aucun accessoire particulier n'est nécessaire à l'utilisation du gabarit de percement (lattis, panneau ou scie cloche d'un autre diamètre que celui du percement à réaliser).
- Les axes de percement peuvent être tracés sur la paroi, ou sur la plaque, à l'emplacement même et dans un diamètre compris dans celui du gabarit de percement car ces mêmes axes de percement resteront visibles au travers des trous oblongs du gabarit de percement ; ceci permettant de réaliser un percement qui ne laissera aucune marque sur la paroi ou sur la plaque (lors de travaux de finition après peinture par exemple).

- Une fois le gabarit de percement fixé (sans serrage), l'ajustement des axes du gabarit de percement aux axes du percement à réaliser est réalisable en un tournemain.
- Le gabarit de percement permet un percement très près, voire contre, un rebord du fait de son diamètre toujours inférieur au diamètre de découpe.
- Il n'y a aucun trou à reboucher après l'utilisation du gabarit de percement car les deux vis de fixation sont emportées avec le disque découpé.
- Les deux secondes marques 110 de la seconde face plane permettent, à l'aide d'un trait laser par exemple, de se projeter à +45° et -45° des axes horizontaux et verticaux de percement du gabarit de percement.
- Le gabarit de percement est relativement léger et très peu encombrant. En effet, le gabarit de percement se loge facilement au cœur même d'une scie cloche et se range donc facilement dans une mallette ou un coffre de travail ; aucun espace de rangement supplémentaire n'est donc nécessaire.

Avantages inhérents au gabarit de percement :
- Le gabarit de percement permet plusieurs diamètres de découpe différents. Par exemple, le gabarit de percement de 60 mm de diamètre décrit ci-dessus fonctionne à partir d'un diamètre de percement de 65 mm et ce jusqu'à 150 mm (voire plus) en passant par tous les diamètres de découpe intermédiaires. Des percements de 150 mm peuvent être nécessaires par exemple pour l'installation de certains spots de plafond.
- La surface périphérique 120 du gabarit de percement ne s'use pas car il n'y a pas de frottement entre les dents de la scie cloche et ledit gabarit de percement.
- Le gabarit de percement, selon sa destination et sa fonction, peut être réalisé en différents matériaux et en différents diamètres.

Autres avantages du gabarit de percement :
- Le gabarit de percement est peu coûteux à produire.
- le gabarit de percement fait réaliser à son utilisateur final des économies en temps et en moyens.
- Le gabarit de percement est relativement léger et très peu encombrant. En effet, le gabarit de percement se loge facilement au cœur même d'une scie cloche et se range donc facilement dans une mallette ou un coffre de travail ; aucun espace de rangement supplémentaire n'est donc nécessaire.
- Partant de ce même constat, le gabarit de percement peut être inséré facilement dans les packagings existants des scies cloches (vente à la pièce ou en coffret).
- Une version dite professionnelle du gabarit de percement peut être développée en matériaux résistants - en aluminium, acier ou inox par exemple - et produite en différents diamètres répondant aux besoins des différents corps de métiers ciblés.

Le gabarit suivant l'invention peut être intégré dans un kit comportant une ou plusieurs scies cloches. Le kit peut également comprendre des vis pour la fixation du gabarit sur la paroi. Ces vis sont avantageusement des vis dont la base de la tête est plate, ce qui facilite le réglage de la position du gabarit.

## Revendications

1. Gabarit de percement (10) pour le percement d'une ouverture cylindrique d'un premier diamètre dans une paroi, comprenant un corps (20) présentant une première face plane (30), le corps (20) étant inscriptible dans un cylindre de diamètre inférieur au premier diamètre et ayant un axe central (40) perpendiculaire à ladite première face plane (30), percé en son centre d'un trou central cylindrique (50), suivant ledit axe central (40), le corps étant percé de deux premiers trous additionnels (60), suivant des axes parallèles audit axe central (40), le corps (20) présentant une seconde face plane (90), parallèle à la première face plane (30), **caractérisé en ce que** la seconde face plane (90) comporte deux premières marques (100) suivant des axes perpendiculaires, et passant par l'axe central (40), lesdites marques (100) étant réalisées en creux dans ladite surface.

2. Gabarit de percement (10) suivant la revendication 1 **caractérisé en ce que** le corps (20) présente une épaisseur mesurée perpendiculairement à la première face plane (30), à la périphérie du trou central (50), égale ou supérieure à 1 cm.

3. Gabarit de percement (10) suivant l'une quelconque des revendications précédentes **caractérisé en ce que** ledit cylindre a un diamètre inférieur à 70 mm.

4. Gabarit de percement (10) suivant l'une quelconque des revendications précédentes **caractérisé en ce que** le corps (20) est percé de deux seconds trous additionnels (70), suivant des axes parallèles audit axe central (40).

5. Gabarit de percement (10) suivant l'une quelconque des revendications précédentes **caractérisé en ce que** le corps (20) est percé de quatre troisièmes trous additionnels (80), suivant des axes parallèles audit axe central (40).

6. Gabarit de percement (10) suivant l'une quelconque des revendications précédentes **caractérisé en ce que** les premiers trous additionnels (60) sont situés sur un même diamètre dudit cylindre, de part et d'autre de l'axe central.

7. Gabarit de percement (10) suivant la revendication précédente **caractérisé en ce que** les seconds trous additionnels (70) sont situés sur un même diamètre, de part et d'autre de l'axe central, à 90° par rapport aux premiers trous additionnels (60).

8. Gabarit de percement (10) suivant l'une quelconque des revendications 6 à 7 **caractérisé en ce que** les troisièmes trous additionnels (80) sont situés sur un même diamètre, de part et d'autre de l'axe central, à 45° de part et d'autre par rapport audit diamètre des premiers trous additionnels (60).

9. Gabarit de percement (10) suivant l'une quelconque des revendications précédentes **caractérisé en ce que** l'un au moins des premiers et/ou des seconds et/ou des troisièmes trous additionnels (60, 70, 80) ont une forme oblongue orientée vers le trou central (50).

10. Gabarit de percement (10) suivant l'une quelconque des revendications précédentes **caractérisé en ce que** l'un au moins des premiers et/ou des seconds et/ou des troisièmes trous additionnels (60, 70, 80) ont une forme oblongue orientée suivant un cercle centré sur l'axe central (40).

11. Gabarit de percement (10) suivant l'une quelconque des revendications précédentes **caractérisé en ce que** la seconde face plane (90) comporte en outre deux secondes marques (110) suivant des axes perpendiculaires, passant par l'axe central (40) et orientées à 45° par rapport aux premières marques (100).

12. Procédé pour exécuter le percement dans une paroi d'une ouverture cylindrique d'un premier diamètre, en une position précise, comportant les étapes de
a) obtenir un gabarit de percement (10) suivant l'une quelconque des revendications précédentes ;
b) positionner le gabarit (10) de telle sorte que son axe central (40) soit positionné au droit du centre du trou cylindrique à réaliser ;
c) fixer le gabarit (10) à la paroi au moyen de vis introduites dans au moins deux des premiers, seconds et/ou troisièmes trous additionnels (60, 70, 80) ;
d) obtenir une scie-cloche comportant une mèche centrale ayant un diamètre égal ou inférieur au diamètre du trou central (50) et présentant un diamètre extérieur égal au premier diamètre ;
e) introduire la mèche centrale dans le trou central et actionner la scie-cloche.

13. Procédé suivant la revendication 12 dans lequel le gabarit obtenu à l'étape a) comporte des secondes marques (110) et/ou des marques axiales (130), et dans lequel, à l'étape b), le positionnement du gabarit est réalisé à l'aide d'un niveau laser, en ajustant lesdites marques sur un faisceau du niveau laser.

14. Kit pour réaliser le percement dans une paroi d'ouvertures cylindriques d'un premier diamètre comportant un gabarit (10) suivant l'une quelconque des revendications 1 à 11 et une scie cloche comportant une mèche centrale ayant un diamètre égal ou inférieur au diamètre du trou central (50) et présentant un diamètre extérieur égal au diamètre des ouvertures cylindriques à réaliser.

15. Kit suivant la revendication 14 **caractérisé en ce qu'**il comprend en outre au moins une vis dont la tête présente une face inférieure plate.

## Patentansprüche

1. Bohrschablone (10) zum Bohren einer zylindrischen Öffnung mit einem ersten Durchmesser in einer Wand, welche einen Körper (20) umfasst, der eine erste ebene Seite (30) aufweist, wobei der Körper (20) in einen Zylinder mit einem Durchmesser, der kleiner als der erste Durchmesser ist, einbeschreibbar ist und eine Mittelachse (40) aufweist, die zu der ersten ebenen Seite (30) senkrecht ist, und in seiner Mitte von einem zylindrischen zentralen Loch (50) entlang der Mittelachse (40) durchbohrt ist, wobei der Körper von zwei ersten zusätzlichen Löchern (60) entlang von zur Mittelachse (40) parallelen Achsen durchbohrt ist, wobei der Körper (20) eine zweite ebene Seite (90) aufweist, die zur ersten ebenen Seite (30) parallel ist, **dadurch gekennzeichnet, dass** die zweite ebene Seite (90) zwei erste Markierungen (100) entlang von zueinander senkrechten Achsen aufweist, die durch die Mittelachse (40) verlaufen, wobei die Markierungen (100) als Vertiefungen in der Oberfläche ausgebildet sind.

2. Bohrschablone (10) nach Anspruch 1, **dadurch gekennzeichnet, dass** der Körper (20) eine senkrecht zur ersten ebenen Seite (30) an der Peripherie des zentralen Lochs (50) gemessene Dicke aufweist, die größer oder gleich 1 cm ist.

3. Bohrschablone (10) nach einem der vorhergehenden Ansprüche, **dadurch gekennzeichnet, dass** der Zylinder einen Durchmesser aufweist, der kleiner als 70 mm ist.

4. Bohrschablone (10) nach einem der vorhergehenden Ansprüche, **dadurch gekennzeichnet, dass** der Körper (20) von zwei zweiten zusätzlichen Löchern (70) entlang von zur Mittelachse (40) parallelen Achsen durchbohrt ist.

5. Bohrschablone (10) nach einem der vorhergehenden Ansprüche, **dadurch gekennzeichnet, dass** der Körper (20) von vier dritten zusätzlichen Löchern (80) entlang von zur Mittelachse (40) parallelen Achsen durchbohrt ist.

6. Bohrschablone (10) nach einem der vorhergehenden Ansprüche, **dadurch gekennzeichnet, dass** sich die ersten zusätzlichen Löcher (60) auf ein und demselben Durchmesser des Zylinders beiderseits der Mittelachse befinden.

7. Bohrschablone (10) nach dem vorhergehenden Anspruch, **dadurch gekennzeichnet, dass** sich die zweiten zusätzlichen Löcher (70) auf ein und demselben Durchmesser beiderseits der Mittelachse befinden und um 90° zu den ersten zusätzlichen Löchern (60) versetzt sind.

8. Bohrschablone (10) nach einem der Ansprüche 6 bis 7, **dadurch gekennzeichnet, dass** sich die dritten zusätzlichen Löcher (80) auf ein und demselben Durchmesser beiderseits der Mittelachse befinden und beiderseits um 45° zum Durchmesser der ersten zusätzlichen Löcher (60) versetzt sind.

9. Bohrschablone (10) nach einem der vorhergehenden Ansprüche, **dadurch gekennzeichnet, dass** wenigstens eines der ersten und/oder der zweiten und/oder der dritten zusätzlichen Löcher (60, 70, 80) eine längliche Form aufweist, die zum zentralen Loch (50) hin ausgerichtet ist.

10. Bohrschablone (10) nach einem der vorhergehenden Ansprüche, **dadurch gekennzeichnet, dass** wenigstens eines der ersten und/oder der zweiten und/oder der dritten zusätzlichen Löcher (60, 70, 80) eine längliche Form aufweist, die entlang eines auf der Mittelachse (40) zentrierten Kreises ausgerichtet ist.

11. Bohrschablone (10) nach einem der vorhergehenden Ansprüche, **dadurch gekennzeichnet, dass** die zweite ebene Seite (90) außerdem zwei zweite Markierungen (110) entlang von zueinander senkrechten Achsen aufweist, die durch die Mittelachse (40) verlaufen und unter einem Winkel von 45° bezüglich der ersten Markierungen (100) ausgerichtet sind.

12. Verfahren zum Ausführen der Bohrung einer zylindrischen Öffnung mit einem ersten Durchmesser in einer Wand an einer präzisen Position, welches die Schritte umfasst:
a) Bereitstellen einer Bohrschablone (10) nach einem der vorhergehenden Ansprüche;
b) Positionieren der Schablone (10) derart, dass ihre Mittelachse (40) gegenüber dem Mittelpunkt des herzustellenden zylindrischen Lochs positioniert ist;
c) Befestigen der Schablone (10) an der Wand mittels Schrauben, die in wenigstens zwei der ersten, zweiten und/oder dritten zusätzlichen Löcher (60, 70, 80) eingeführt werden;
d) Bereitstellen einer Glockensäge, die einen Zentrierbohrer mit einem Durchmesser umfasst, der kleiner oder gleich dem Durchmesser des zentralen Lochs (50) ist, und einen Außendurchmesser aufweist, der gleich dem ersten Durchmesser ist;
e) Einführen des Zentrierbohrers in das zentrale Loch und Betätigen der Glockensäge.

13. Verfahren nach Anspruch 12, wobei die in Schritt a) bereitgestellte Schablone zweite Markierungen (110) und/oder axiale Markierungen (130) aufweist und wobei in Schritt b) die Positionierung der Schablone mithilfe eines Lasernivelliergerätes durchgeführt wird, indem die Markierungen auf einen Strahl des Lasernivelliergerätes eingestellt werden.

14. Kit zum Ausführen der Bohrung von zylindrischen Öffnungen mit einem ersten Durchmesser in einer Wand, welches eine Schablone (10) nach einem der Ansprüche 1 bis 11 und eine Glockensäge umfasst, die einen Zentrierbohrer mit einem Durchmesser umfasst, der kleiner oder gleich dem Durchmesser des zentralen Lochs (50) ist, und die einen Außendurchmesser aufweist, der gleich dem Durchmesser der herzustellenden zylindrischen Öffnungen ist.

15. Kit nach Anspruch 14, **dadurch gekennzeichnet, dass** es außerdem wenigstens eine Schraube umfasst, deren Kopf eine flache Unterseite aufweist.

## Claims

1. Drilling template (10) for drilling a cylindrical opening of a first diameter in a wall, comprising a body (20) having a planar first face (30), the body (20) being able to fit into a cylinder of smaller diameter than the first diameter and having a central axis (40) at right angles to said planar first face (30), drilled at its centre with a cylindrical central hole (50), along said central axis (40), the body being drilled with two first additional holes (60), along axes parallel to said central axis (40), the body (20) having a planar second face (90), parallel to the planar first face (30), **characterized in that** the planar second face (90) comprises two first marks (100) along right-angled axes, and passing through the central axis (40), said marks (100) being hollowed out in said surface.

2. Drilling template (10) according to Claim 1, **characterized in that** the body (20) has a thickness, measured at right angles to the planar first face (30), at the periphery of the central hole (50), equal to or greater than 1 cm.

3. Drilling template (10) according to either of the preceding claims, **characterized in that** said cylinder has a diameter of less than 70 mm.

4. Drilling template (10) according to any one of the preceding claims, **characterized in that** the body (20) is drilled with two second additional holes (70), along axes parallel to said central axis (40).

5. Drilling template (10) according to any one of the preceding claims, **characterized in that** the body (20) is drilled with four third additional holes (80), along axes parallel to said central axis (40).

6. Drilling template (10) according to any one of the preceding claims, **characterized in that** the first additional holes (60) are situated on a same diameter of said cylinder, on either side of the central axis.

7. Drilling template (10) according to the preceding claim, **characterized in that** the second additional holes (70) are situated on a same diameter, on either side of the central axis, at 90° with respect to the first additional holes (60).

8. Drilling template (10) according to either one of Claims 6 and 7, **characterized in that** the third additional holes (80) are situated on a same diameter, on either side of the central axis, at 45° on either side with respect to said diameter of the first additional holes (60).

9. Drilling template (10) according to any one of the preceding claims, **characterized in that** at least one of the first and/or second and/or third additional holes (60, 70, 80) has or have an oblong form oriented towards the central hole (50).

10. Drilling template (10) according to any one of the preceding claims, **characterized in that** at least one of the first and/or second and/or third additional holes (60, 70, 80) has or have an oblong form oriented along a circle centred on the central axis (40) .

11. Drilling template (10) according to any one of the preceding claims, **characterized in that** the second planar face (90) further comprises two second marks (110) along right-angled axes, passing through the central axis (40) and oriented at 45° with respect to the first marks (100).

12. Method for executing the drilling in a wall of a cylindrical opening of a first diameter, at a precise position, comprising the steps of
a) obtaining a drilling template (10) according to any one of the preceding claims;
b) positioning the template (10) such that its central axis (40) is positioned in line with the centre of the cylindrical hole to be produced;
c) fixing the template (10) to the wall by means of screws inserted into at least two of the first, second and/or third additional holes (60, 70, 80);
d) obtaining a hole saw comprising a central bit having a diameter equal to or less than the diameter of the central hole (50) and having an outer diameter equal to the first diameter;
e) inserting the central bit into the central hole and actuating the hole saw.

13. Method according to Claim 12, wherein the template obtained in the step a) comprises second marks (110) and/or axial marks (130), and wherein, in the step b), the positioning of the template is done using a laser level by adjusting said marks to a beam from the laser level.

14. Kit for performing the drilling in a wall of cylindrical openings of a first diameter comprising a template (10) according to any one of Claims 1 to 11 and a hole saw comprising a central bit having a diameter equal to or less than the diameter of the central hole (50) and having an outer diameter equal to the diameter of the cylindrical openings to be produced.

15. Kit according to Claim 14, **characterized in that** it further comprises at least one screw whose head has a flat bottom face.
